# EUROPEAN PATENT APPLICATION

(11) **EP 1 385 097 A2**
(43) Date of publication of application: **28.01.2004**
(21) Application number: 03011763.4
(22) Date of filing: 23.05.2003
(51) Int. Cl.: G06F 17/30

(54) **Content Filtering for Web Browsing**

(30) Priority: 27.06.2002 US 183657
(71) Applicant: MICROSOFT CORPORATION, Redmond, WA 98052 (US)
(72) Inventor: Beilinson, Craig Adam, Bellevue, Washington 98006 (US); Evans, Christopher A., Sammamish, Washington 98074 (US); Fravert, Harry J.W., Redmond, Washington 98052 (US); Taylor, William Ross, Kirkland, Washington 98033 (US)
(74) Representative: Grünecker, Kinkeldey, Stockmair & Schwanhäusser Anwaltssozietät

(57) **Abstract**

The present invention provides a system and method for controlling whether a user may access certain Internet sites when using a computer. The system and method are carried out on a personal computer having a local ratings cache, a cache refresher, a local ratings interpreter and an allow-block list. When the computer user attempts to access an Internet site referenced by a specified Uniform Resource Locator ("URL"), the invention determines whether the URL is referenced on the allow-block list and, if so, allows or disallows access to the site referenced by the URL accordingly. If the URL is not referenced on the allow-block list, the invention obtains a content category from either the local ratings cache or, if not contained therein, a ratings service. If the content category may be viewed by a person in the user's age group, as determined by reference to an age group map cross-referencing age group to permissibly viewable categories for each such age group, the local ratings interpreter permits access to the Internet site referenced by the specified URL; otherwise, access is not allowed. A copy of the settings for the user, such as the age group, the allow-block list and the age group map, are stored on a content settings service so that the user's settings can be accessed and used on any computer the user is operating.

## Description

### TECHNICAL FIELD

The present invention relates to a computer system and, more particularly, to a system and method for enabling an administrator to prevent a user from accessing selected Internet web sites.

### BACKGROUND OF THE INVENTION

The current computing era has been aptly termed an "Information Age." On-line information proliferates daily, attracting many young people to the ranks of computer users. Parents often encourage children to learn about computers, including use of the Internet. The Internet offers access to a wealth of educational, entertainment and similar materials of interest to young people. Unfortunately, the Internet is also replete with information inappropriate for young people. Children can be very curious in exploring web sites on the Internet, and parents often cannot provide constant monitoring of a child's Internet usage.

To assist parents in monitoring Internet usage, web site rating services have been developed. These on-line services categorize web sites according to content. For example, the web site www.cnn.com would be in the "News" category. Software, such as an Internet web browser, has in turn been adapted to communicate with the ratings services. The browser software may allow an administrator to select a level of categories that a user may not view when using the computer on which the browser software resides. A web site in a disallowed category will then be blocked from viewing by the browser software. The browser software may likewise allow a parent to create a list of disallowed web sites. For example, the MICROSOFT INTERNET EXPLORER browser software product enables a parent to disallow the viewing of web sites on a specific computer by category, such as those falling into various ranges of categories, including Language, Nudity, Sex and Violence. A list of individual web sites that can never be viewed may likewise be created for a specific computer.

While the current approach affords children some protection from inappropriate web sites, it has many limitations. Existing content filtering approaches can be too broad in blocking access. For example, content settings on a given computer typically apply to all users of the computer. Without additional authorization, adult users may undesirably be limited to viewing content suitable for a child user of the computer. Similarly, ratings services typically place an entire web site in a single category that may be blocked for a user. The entire web site is then blocked even though portions of the web site may contain material appropriate for viewing by the user. Likewise, a ratings service might classify a web site discussing a subject such as breast cancer in a blocked category, although the parent might be willing to grant the child access to this site. There is presently no easy mechanism for creating an exception to the blocked access without making a specific entry on a specific computer for each such web site that the child might view.

The existing approach to the use of ratings services can likewise be inefficient. When using a ratings service, the browser is required to query the service, which resides on a remote computer, before displaying almost every web page. These repeated query operations can slow the display of web pages, particularly at currently typical dial-up Internet connection speeds.

Furthermore, computer-savvy young people may view the circumvention of content monitoring limitations as a challenge. For example, since the content settings apply only to a specific computer, a child may try to access otherwise blocked web sites from a different computer. There is presently no satisfactory method for reliably roaming a user's content limitations from computer-to-computer. Moreover, clever users may be able to defeat some monitoring methodologies by using software that ignores ratings information or by implementing other programming capabilities. For example, when the content protection is stored solely on an individual personal computer, attempts could be made to defeat the protection by uninstalling and re-installing a given browser software and attempting to manipulate certain system settings, such as those contained in the MICROSOFT WINDOWS Registry. Such attempted system modifications could render the personal computer inoperable.

In summary, the shortcomings of the current web content filter approaches make it difficult for parents to effectively control a child's web site access.

### BRIEF SUMMARY OF THE INVENTION

The present invention addresses the limitations in existing parental control technologies by providing a system and method for efficiently and dynamically filtering the web sites that a user, such as a child, may permissibly view on any personal computer. The invention includes providing a local computer with a local ratings cache, a local ratings interpreter and an allow-block list. The local ratings cache is a locally stored file containing a listing of Internet site identifiers, which typically are Uniform Resource Locators ("URLs"), and the content category for each such web site. The local ratings interpreter is adapted to receive a web site URL and to determine, based on web site category and the user's age group, whether a given web site is authorized for viewing by the individual user. The allow-block list is a file containing a listing of specific URLs that the user is expressly authorized to view or expressly prohibited from viewing. A content settings service is further provided containing settings for the user as determined by an administrator. Such settings include an age group map that cross-references age groups to the categories of web sites permissibly viewable by the respective age group. Such settings may also include the user's allow-block list and the user's age group as determined and customized by the administrator.

The local computer user begins by obtaining access to a network, such as the Internet. The user's computer then normally obtains the user's settings from the content settings service via the network although a locally stored version may likewise be obtained. A URL is then entered on the local computer directing the local computer to attempt to access the Internet site designated by the URL. The present invention determines whether the URL is referenced on the allow-block list. If the web site is referenced on the list and is an allowed site, the web page is displayed. If the web site is referenced on the list but is a blocked site, the web page is not displayed.

If the web site URL is not referenced on the allow-block list or if no allow-block list is available, then the invention examines the local ratings cache to determine whether a cached version of the web site's category exists. If so, the category information is retrieved from the cache. If not, the invention then communicates with a ratings service via the network to obtain the web site's content category. The updated category information is written to the local ratings cache. If no category information is available for the URL, it is given a "not categorized" category.

A local ratings interpreter then determines whether the URL, which is not referenced on the allow-block list, may be displayed based on the web site category and the settings, such as the user's age group and the age group map. If the age group map shows that the web site category may be viewed by the user's age group, the web site is displayed; otherwise the web site is not displayed.

Additional advantages and the novel features of the invention will be set forth in the description which follows, and in part will be apparent to those skilled in the art upon examination of the following, or may be learned by practice of the invention.

### BRIEF DESCRIPTION OF THE SEVERAL VIEWS OF THE DRAWINGS

The present invention is described in detail below with reference to the attached drawing figures, wherein:
FIG. 1 is a block diagram of a computing system suitable for use in implementing the present invention on a computer;
FIG. 2 is an overall block diagram of the present invention;
FIG. 3 is a flow chart illustrating an overview of the present invention; and
FIG. 4 is a flow chart illustrating the cache refresher of the present invention.

### DETAILED DESCRIPTION OF THE INVENTION

The present invention is implemented on a personal computer having an operating system and access to the Internet. The operating system is configured to access an Internet site through an interface. For example, as will be understood by those skilled in the art, the MICROSOFT WINDOWS operating system contains the well-known Windows Socket or Winsock interface through which all Internet site requests are routed. The present invention operates in communication with such an interface to enable and disable access to selected Internet sites, such as by intercepting HTTP requests to access a given site identifier, which could include an identifier such as a Uniform Resource Locator or "URL."

The personal computer is also supplied with an allow-block list, a local ratings cache, a cache refresher and a local ratings interpreter. The allow-block list is a listing of specific site identifiers that the user is expressly authorized to view or prohibited from viewing. Each user normally has an allow-block list that is tailored to the user, although the present embodiment may operate without an allow-block list. As discussed more fully below, the allow-block list may be supplied as an XML document, encrypted on the user's computer to avoid unauthorized modification. The local ratings cache is a locally stored listing of Internet site identifiers, including URLs, along with a content category for each such site identifier. The local ratings cache may likewise be supplied as an XML document, encrypted on the user's computer to avoid unauthorized modification. The cache refresher determines whether a specified site identifier to be accessed is already referenced in the local ratings cache and, if not, obtains a content category for the specified site identifier from a ratings service which is then stored in the local ratings cache. The cache refresher may be further configured to obtain a content category for a site identifier already in the local ratings cache if the content category has not been updated during a previous specified period, such as during the previous 90 days. The local ratings interpreter is adapted to determine, based on web site content category and the settings, whether a given web site is authorized for viewing by the individual user. A content settings service is further provided containing settings determined by an administrator. Such settings include the user's allow-block list, the user's age group as determined and customized by the administrator and an age group map.

The local computer user begins by obtaining access to a network, such as the Internet. Upon successfully establishing such access, the user's computer obtains settings for the user from the content settings service. Such settings include the user's age group, the age group map listing permissible content categories for at least the user's age group and the allow-block list. The settings for the user could be transmitted to the local computer in a variety of ways, such as by the transmission of one or more XML files containing this information. An Internet site identifier is then entered on the user's computer directing the computer to attempt to access the Internet site designated by the site identifier. The present invention determines whether the site identifier is referenced on the allow-block list. If the site identifier is referenced on the allow-block list and is an allowed site, the web page is displayed. If the site identifier is referenced on the allow-block list but is a blocked site, the web page is not displayed.

If the site identifier is not referenced on the allow-block list or if no allow-block list is available, then the invention examines the local ratings cache to determine whether a cached version of the web site's content category exists. If so, the content category is retrieved from the cache. If not, the invention then communicates with a ratings service to obtain the web site's content category. The updated content category information is written to the local ratings cache. If no rating information is available for the site identifier, it is given a "not categorized" content category.

The local ratings interpreter then determines whether the site may be displayed based on the web site content category and the settings for the user. If the age group map shows that the web site category may be viewed by the user's age group, the web site is displayed; otherwise the web site is not displayed.

Having briefly described an embodiment of the present invention, an exemplary operating system for the present invention is described below:

### Exemplary Operating Environment

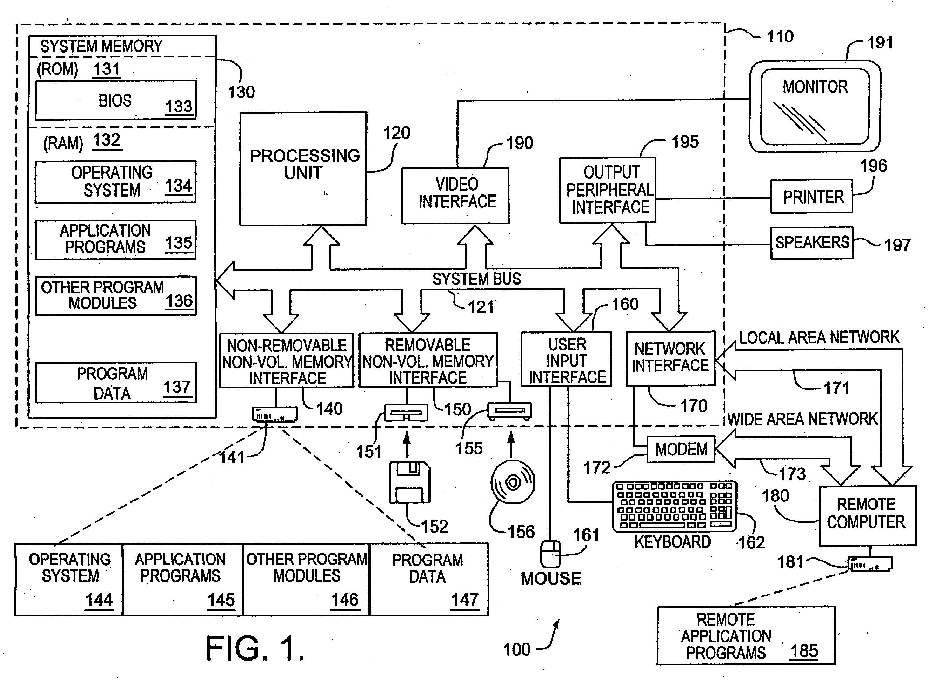

Figure 1 illustrates an example of a suitable local computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention may be described in the general context of computer-executable instructions, such as program modules, being executed by a computer. Generally, program modules include routines, programs, objects, components, data structures, etc. that perform particular tasks or implement particular abstract data types. Moreover, those skilled in the art will appreciate that the invention may be practiced with other computer system configurations, including hand-held devices, multiprocessor systems, microprocessor-based or programmable consumer electronics, minicomputers, mainframe computers, and the like. The invention may also be practiced in distributed computing environments where tasks are performed by remote processing devices that are linked through a communications network. In a distributed computing environment, program modules may be located in both local and remote computer storage media including memory storage devices.

With reference to FIG. 1, an exemplary system 100 for implementing the invention includes a general purpose computing device in the form of a computer 110 including a processing unit 120, a system memory 130, and a system bus 121 that couples various system components including the system memory to the processing unit 120.

Computer 110 typically includes a variety of computer readable media. By way of example, and not limitation, computer readable media may comprise computer storage media and communication media. The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 1 illustrates operating system 134, application programs 135, other program modules 136, and program data 137.

The computer 110 may also include other removable/nonremovable, volatile/nonvolatile computer storage media. By way of example only, FIG. 1 illustrates a hard disk drive 141 that reads from or writes to nonremovable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/nonremovable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 1, provide storage of computer readable instructions, data structures, program modules and other data for the computer 110. In FIG. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies. A user may enter commands and information into the computer 110 through input devices such as a keyboard 162 and pointing device 161, commonly referred to as a mouse, trackball or touch pad. Other input devices (not shown) may include a microphone, joystick, game pad, satellite dish, scanner, or the like. These and other input devices are often connected to the processing unit 120 through a user input interface 160 that is coupled to the system bus 121, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 195.

The computer 110 in the present invention will operate in a networked environment using logical connections to one or more remote computers, such as a remote computer 180. The remote computer 180 may be a personal computer, and typically includes many or all of the elements described above relative to the computer 110, although only a memory storage device 181 has been illustrated in FIG. 1. The logical connections depicted in FIG. 1 include a local area network (LAN) 171 and a wide area network (WAN) 173, but may also include other networks.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, FIG. 1 illustrates remote application programs 185 as residing on memory device 181. It will be appreciated that the network connections shown are exemplary and other means of establishing a communications link between the computers may be used.

Although many other internal components of the computer 110 are not shown, those of ordinary skill in the art will appreciate that such components and the interconnection are well known. Accordingly, additional details concerning the internal construction of the computer 110 need not be disclosed in connection with the present invention.

### Content Filtering For Web Browsing

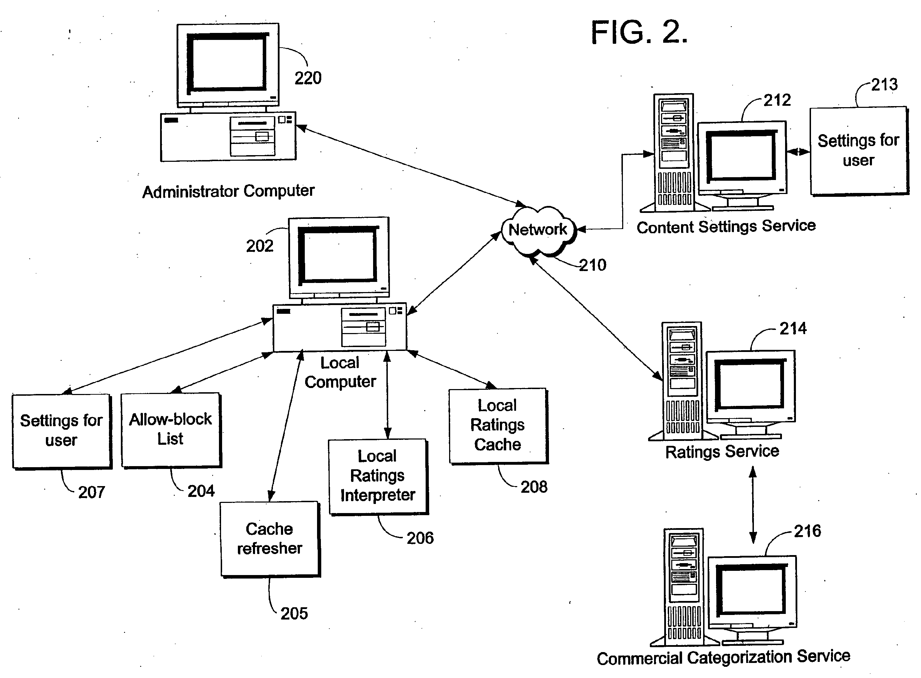

FIG. 2 illustrates an overall block diagram of a networking environment of an embodiment. As shown in FIG. 2, a local computer 202 is shown that may be an IBM compatible PC or other type of personal computer. The local computer has an operating system configured to direct all attempted accesses to the Internet through a single interface, such as the MICROSOFT WINDOWS XP operating system, which uses the well-known Winsock interface. Residing on local computer 202 are an allow-block list 204, a cache refresher 205, a local ratings interpreter 206, settings 207 and a local ratings cache 208. Local computer 202 has a connection with network 210, which may be the Internet or other network. Local computer 202 may communicate with content settings service 212 via network 210. Content settings service 212 may likewise contain settings 213 that can include an age group for a user, an allow-block list and an age group map. Content settings service 212 is likewise coupled with network 210 for communication with ratings service 214 that in turn may be connected and can access the commercial categorization service 216. Content settings service 212 and ratings service 214 may be implemented using standard server hardware and an Internet server software, such as the MICROSOFT INTERNET INFORMATION SERVER product. Ratings service 214 is provided with a desired set of site identifiers, such as URLs and, for each such URL, a content category. Rating service 214 is configured to accept a content category query from local computer 202 and to respond to local computer 202 with the content category of the supplied site identifier. An administrator computer 220 is provided that can communicate via network 210 with the content settings service 212 to create and edit settings for selected users.

As will be understood by those skilled in the art, commercial web site categorization services are available. Such services typically place Internet site identifiers, such as URLs, in certain predefined categories corresponding to the web site's content. For example, a web site categorization service is offered by the Surf Control Company at www.SurfControl.com. Available content categories could include:

| | | |
|---|---|---|
| 1. Adult/Sexually Explicit | 15. Hacking | 28. Reference |
| 2. Advertisements | 16. Hate Speech | 29. Religion |
| 3. Arts & Entertainment | 17. Health & Medicine | 30. Remote Proxies |
| 4. Chat | 18. Hobbies & Recreation | 31. Search Engines |
| 5. Computing & Internet | 19. Hosting Sites | 32. Sex Education |
| 6. Criminal Skills | 20. Job Search | 33. Shopping |
| 7. Drugs, Alcohol, Tobacco | 21. Kid's Sites | 34. Sports |
| 8. Education | 22. Lifestyle & Culture | 35. Streaming Media |
| 9. Finance & Investment | 23. Motor Vehicles | 36. Travel |
| 10. Food & Drink | 24. News | 37. Usenet News |
| 11. Gambling | 25. Personals and Dating | 38. Violence |
| 12. Games | 26. Photo Searches | 39. Weapons |
| 13. Glamour/Intimate Appl | 27. Real Estate | 40. Web-based Email |
| 14. Government & Politics | | |

As will be understood by those skilled in the art, a local computer may query a ratings service by supplying the ratings service with a specified site identifier. The ratings service may be separate from a commercial categorization service and may communicate with such a service to obtain web site categorization information therefrom. When queried by local computer 202, the ratings service will normally respond with the content category of the specified site identifier. For example, local computer 202 could supply the site identifier www.cnn.com to ratings service 214, which could respond to local computer 202, using the above content categories, that the site identifier is in content category 24 for "News."

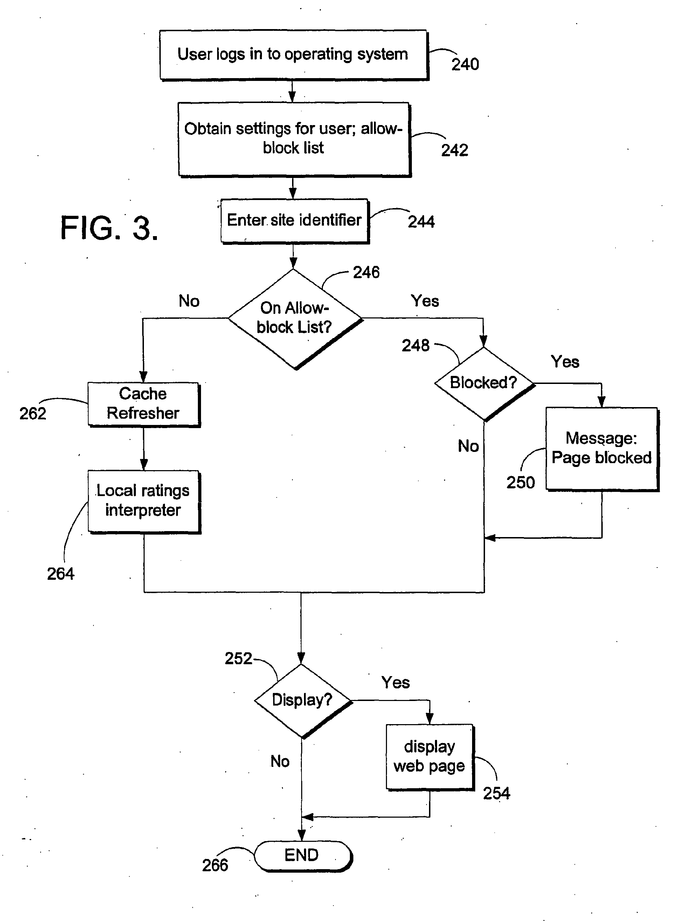

FIG. 3 illustrates an overall flow chart of an embodiment. The method begins at step 240 whereupon the user of the personal computer logs in to the operating system. As will be appreciated by those skilled in the art, a user account is set up by a system administrator or the user's parent such that settings for the user are stored. The settings can include a variety of information, including the user's user ID, password and age group. After the user has been authenticated to the operating system at step 240, the embodiment obtains the latest settings for the user and the allow-block list at step 242. In this context, user setting include the user's age group and an age group map. The number of age groups need not be fixed. For example, four age groups could be created. Age group 1 could be the most restrictive, such as for young children ages 12 and under. Age group 2 could be somewhat less restrictive, perhaps targeted for children ages 13-15. Age group 3 could be even further less restrictive, perhaps targeted for children ages 16-18, and age group 4 could be intended for adults, wherein no restrictions on web site access would apply. An administrator determines in advance the user's assigned age group by communicating such age group from administrator computer 220 to content settings service 212. In this regard, it will be understood that the age groups could be abstracted, such that age group 1 for a given user could differ from age group 1 for another user.

An age group map is a cross-reference defining the content categories that each designated age group may view. The age group map may be provided as an XML document, such as the following:

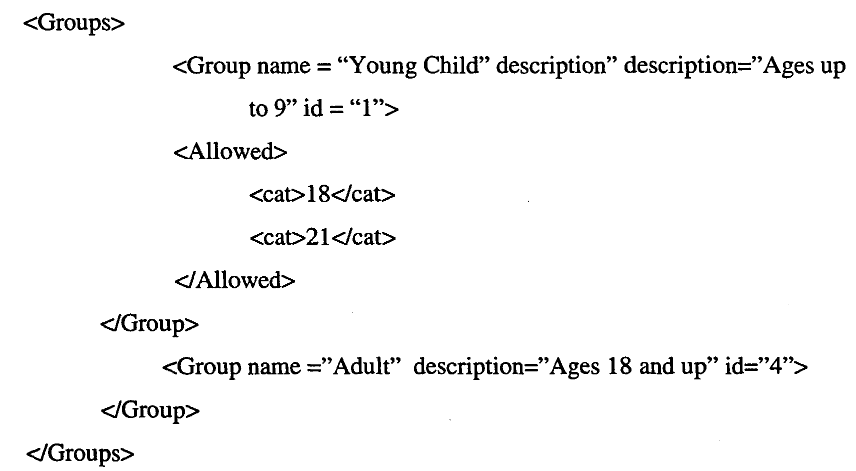

As will be appreciated by those skilled in the art, the above XML document contains appropriate designations for an age group, here showing an age group for "Young Child" designated as age group 1. Under the "Allowed" tag, two categories of web sites are allowed for viewing, namely categories 18 and 21. Similarly, an age group for "Adult" is shown having age group 4. A user having an "Adult" age group is not restricted in the above example as to viewing a web site with respect to the content categories.

Settings for the user may include category definition data provided as an XML document in the following format:

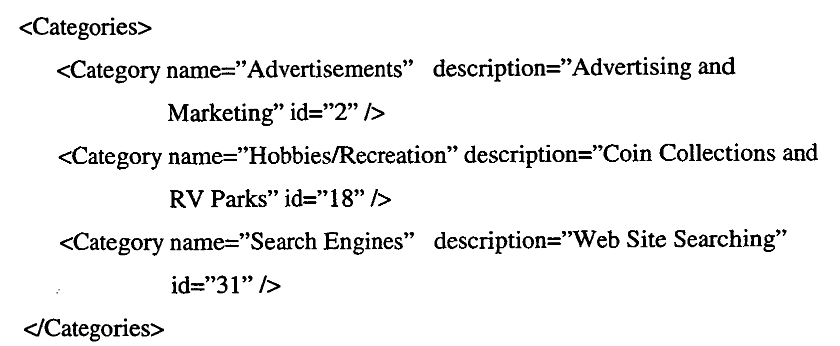

Here, the XML tags "name" and "description" provide a description of the category. Thus, the first entry shown above is category 2, which signifies that a web site contains advertising and marketing content. As shown above, numerous content categories could be listed in this manner. In this way, the local computer may have descriptive text associated with a given content category number.

The local ratings cache is a file on the local computer that contains site identifiers previously accessed by any user of the local computer. For each such site identifier, the cache also contains the content category for the site identifier and the date on which the site identifier was last obtained from the ratings service. The local cache could likewise be provided in the XML format, such as the following:

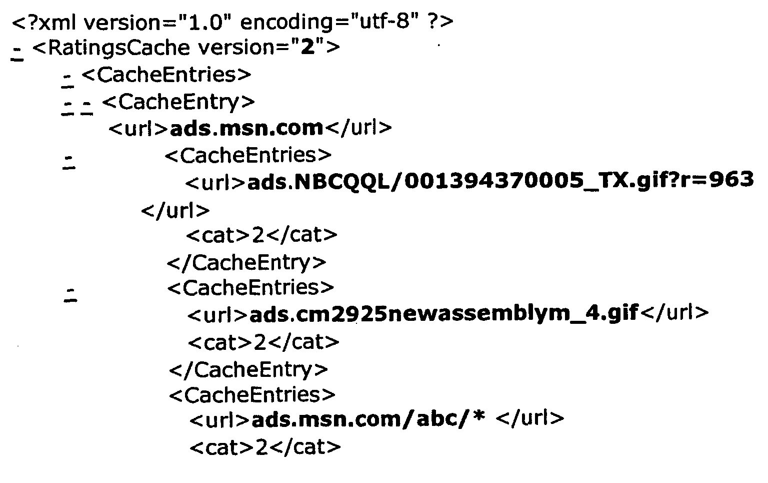

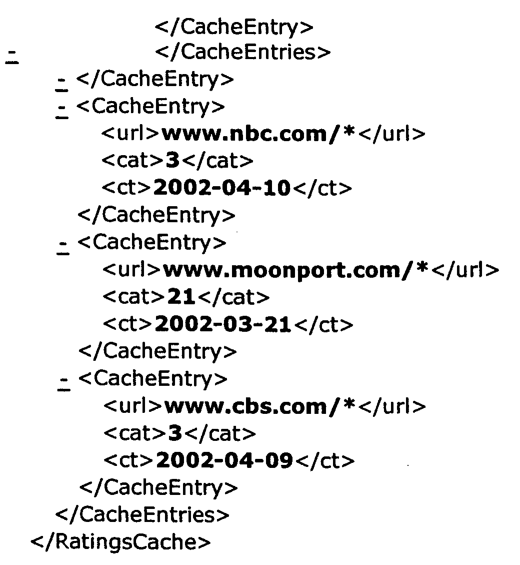

The use of the local ratings cache aids efficiency when the site identifier sought is in the cache by avoiding having to query a ratings service. The local ratings cache is designed with two levels: a primary cache and a secondary cache. A primary cache entry is a domain level site identifier such as www.cbs.com. The local ratings cache may contain a designation that signifies that all pages beneath the primary site identifier are governed by the designated category. In the above example, www.cbs.com/* signifies that the entire web site is governed by the category designation, which is shown as "3." Alternatively, a secondary cache entry is a directory or page below a primary site identifier and may be optionally employed when several pages or directories below the same primary site identifier have different content category values. For example, www.xyz.com/abc/* could have a content category of 6, but www.xyz.com/def/ could have a content category of 12. Such designations would mean that all pages below the www.xyz.com/abc/ domain level would have content category 6, and all pages below the www.xyz.com/def domain level would have content category 12. Similarly, specific secondary site identifier references could be included without using the "*" wildcard, such as shown in the above example as ads.NBCQQL/001394370005_TX.gif?r=963.

The local ratings cache is normally encrypted so that a user cannot modify the category or date associated with a site identifier in the local cache. The local ratings cache may be stored as a separate file, as part of a larger file or elsewhere on a storage device. Moreover, the local ratings cache could be limited to a designated number of entries, such as 250, purging older entries on a first-in, first-out, basis, based on the date shown in the <ct> or similar XML tag containing the date on which the content category for the given site identifier was last updated in the local ratings cache.

The local computer may be further supplied with an allow-block list containing site identifiers and, for each such site identifier, a designation of whether viewing of the site identifier by the user is allowed or disallowed. The allow-block list may likewise be supplied in the XML format, such as

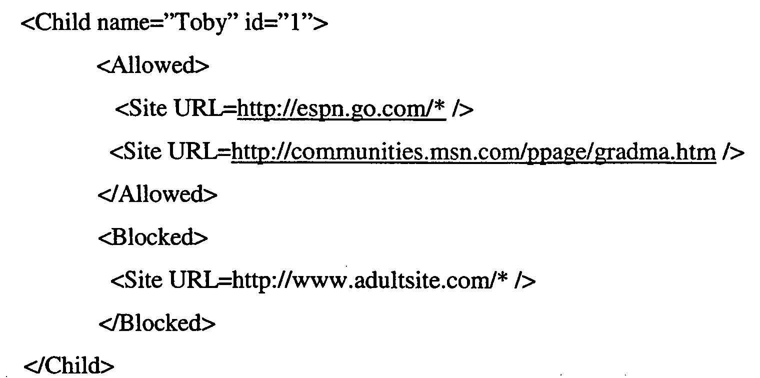

Thus, the allow-block list has a tag designated as "Child name" to identify the applicable user. Allowed site identifier s are listed under the "Allowed" tag, and blocked site identifier s are listed under the "Blocked" tag as shown above. The allow-block list may contain a primary site identifier that applies to all individual web pages and other resources referenced under the site identifier. Thus, in the above example, the www.adultsite.com/* entry, having an asterisk and being within the <Blocked> tags, causes the entire site for www.adultsite.com to be blocked. Other web pages having a site identifier reference beginning with "www.adultsite.com" would thus be governed by the allow-block designation given the primary site identifier. Alternatively, a secondary site identifier may be specified in the allow-block list to govern access to an individual web page without affecting access to other pages for a given site identifier. Thus, an entry such as http://communities.msn.com/ppage/gradma.htm. would apply only to the specific page and not to other pages under the main site identifier, here communities.msn.com. Alternatively, the secondary site identifier www.xyz.com/abc/* would apply the allow or block designation to all web page at or below the www.xyz.com/abc/ domain level. In this way, a site identifier entered by a user may be referenced on the allow-block list, even if the specified site identifier is not contained verbatim in the allow-block list, so long as the domain reference to the site identifier is contained therein. Under the present embodiment, an administrator or parent may choose not to expressly enable or disable access to any site identifier, thus obviating the need for an allow-block list for the given user.

At step 244, the user, or an application running on the personal computer, enters a specified site identifier that references an Internet site. Examples of such site identifiers include designators such as www.microsoft.com but could also include an Internet Protocol (IP) address. After the site identifier has been entered, the embodiment determines whether the site identifier is on the allow-block list at step 246. In this regard, the precise site identifier entered by the user may be referenced on the allow-block list. Alternatively, the specified site identifier may be referenced by a primary site identifier entry or a secondary site identifier entry encompassing the domain of the site identifier entered. In the latter case, the allow-block list could contain an entry such as www.cbs.com/* in the "allowed" portion of the allow-block list signifying that all pages at the www.cbs.com domain could permissibly be viewed. A user could enter a specified site identifier such as www.cbs.com/news/story.html. The allow-block list, having the www.cbs.com/* entry would thus reference and include the specified site identifier.

If the site identifier is referenced on the allow-block list, control passes to step 248 where it is determined whether the site identifier is designated as blocked on the allow-block list. If the site identifier is blocked, then at step 250, a message may be provided to the user advising that the display of the page is blocked. If, on the other hand, at step 248 the display of the page is not blocked, then control passes to step 252 which determines whether the page was blocked or displayed. If at step 252 the page is displayable, control passes to step 254 wherein the web page is displayed. If, on the other hand at step 252, the web page is not displayable, control passes to step 266 and processing under the embodiment ends.

If, on the other hand at step 246, the site identifier is not referenced on the allow-block list or no allow-block list is available, then the embodiment step 262, processes the site identifier in accordance with the cache refresher, discussed more specifically below, so that a content category for the site identifier is obtained. The content category is accessed by the local ratings interpreter 264, which determines whether the site identifier may be accessed. In making this determination, the local ratings interpreter determines from the age group map whether a person in the user's age group may permissibly view a site identifier having the given content category. The local ratings interpreter may be implemented in a variety of ways, such as by using the MICROSOFT VISUAL C++ programming language. Control then passes to step 252 and proceeds as previously discussed above.

The local ratings adapted may be further adapted to permit access to site identifier s that are ancillary to a main site identifier. For example, the site identifier www.microsoft.com may be provided by a user. The web page referenced by this main site identifier may in turn contain ancillary site identifier s that reference various other resources intended to be displayed as part of the web page referenced by the main site identifier, such as graphics. The local ratings adapter can be configured to allow or disallow access to such ancillary site identifier s based on the access, or lack thereof, allowed for the main site identifier without first obtaining for a specific content category for the ancillary site identifier.

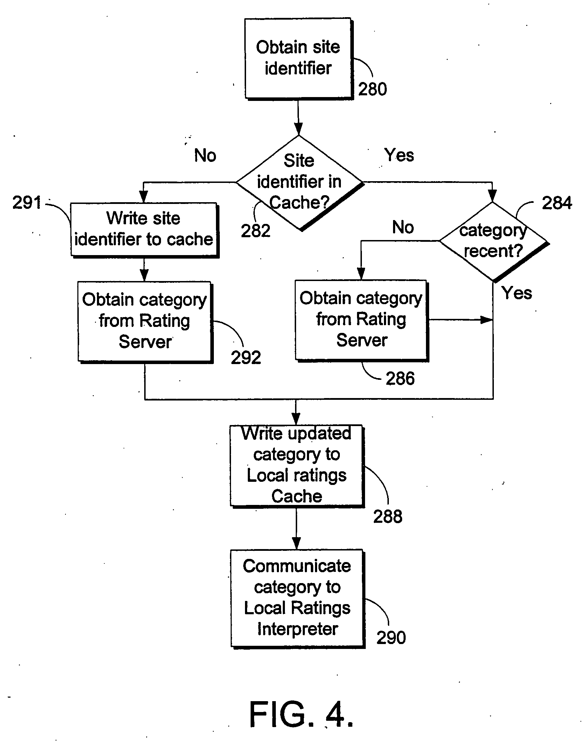

FIG. 4 is a flow chart illustrating in further detail the cache refresher referenced in FIG. 3 at step 262. As will be appreciated by those skilled in the art, the cache refresher could be implemented in a variety of ways, such as by using the MICROSOFT VISUAL C++ programming language. In FIG. 4, cache refresher 262 begins by obtaining the specified site identifier at step 280. If at step 282 the specified site identifier is referenced in the local ratings cache, then control passes to step 284 to determine whether the content category for the specified site identifier is sufficiently recent. As noted above, in this context, it is not necessary for the specified site identifier to be contained verbatim in the local ratings cache as long as a reference to the SITE IDENTIFIER, such as a reference to its domain, is contained therein. In determining whether the content category is sufficiently recent, the embodiment might for example require that the content category have been updated within the last 45 days. If at step 284, the content category is not deemed sufficiently recent, then control passes to step 286 and the present method obtains a content category from the ratings service. For example, if the cache refresher requires that a content category be no more than 45 days old, a content category would be obtained even if a site identifier was referenced in the local ratings cache if the site identifier's content category were last updated 120 days ago. The number of days after which a cache entry expires could be changed based upon performance feedback so that 45 days is an approximate time period of expiration. Control then passes to step 288, whereupon the updated content category information is written to the local ratings cache and the updated content category information at step 290 is communicated to the local ratings interpreter.

If, on the other hand, at step 282 it is determined that the site identifier is not referenced in the local ratings cache, then control passes to step 291 and the site identifier is written to the local ratings cache. Control then passes to step 292 and the content information is sought from the ratings service. Such information could be requested and communicated in a variety of ways. For example, the request for a content category for the site identifier http://www.xyz.com could be formulated using the XML language as follows:

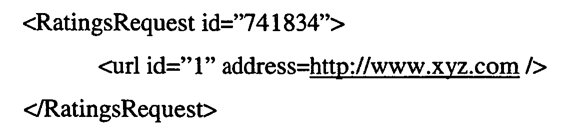

After receiving the content category request, the ratings service could determine that the specified site identifier was in content category 4 and respond to the request using the XML format, such as:

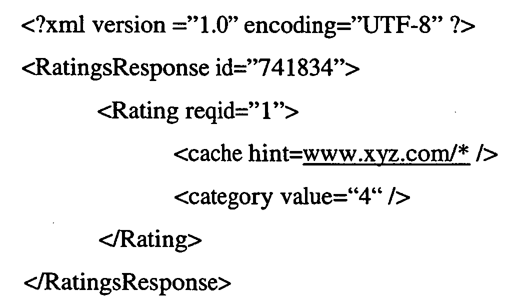

Upon obtaining the content category information, control passes to step 288 for processing as discussed above.

In operation, an administrator or parent would supply the content settings service with settings for a specified user. Such settings could include the user's age group, age group map and an allow-block list. The information could be supplied using, for example, an HTTP POST command to transmit data or an XML file to the content settings service. For purposes of the present example, the user's age group is "1" and the age group map appears as follows for the user:

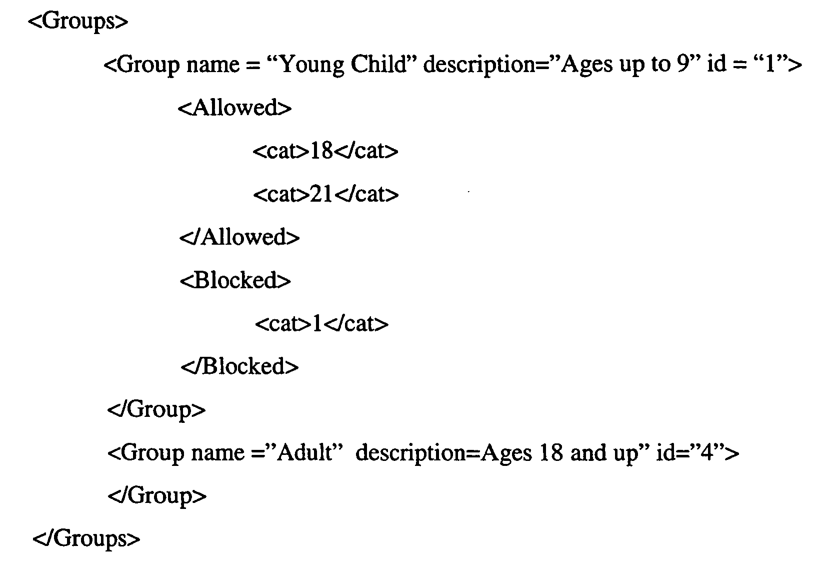

Moreover, the allow-block list appears as follows:

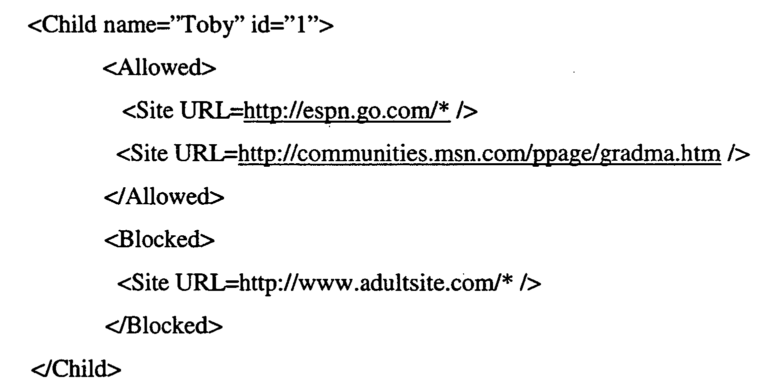

The local computer user would begin by obtaining access to a network, such as the Internet. The user's computer would then establish a communication session with the content settings service and obtain the settings for the user from the content settings service. Such settings include the user's age group and the user's allow-block list as well as an age group map. A site identifier or URL, such as www.nbc.com/news/story.htm, is then entered on the user's computer directing the computer to attempt to access the Internet site designated by the site identifier. The present invention determines whether the site identifier is referenced on the allow-block list. In the above example, the site identifier is not contained on the allow-block list, meaning that it is neither expressly allowed nor disallowed.

Since the site identifier is not referenced on the allow-block list, the embodiment then searches the local ratings cache. For purposes of the present example, the local ratings cache appears as follows:

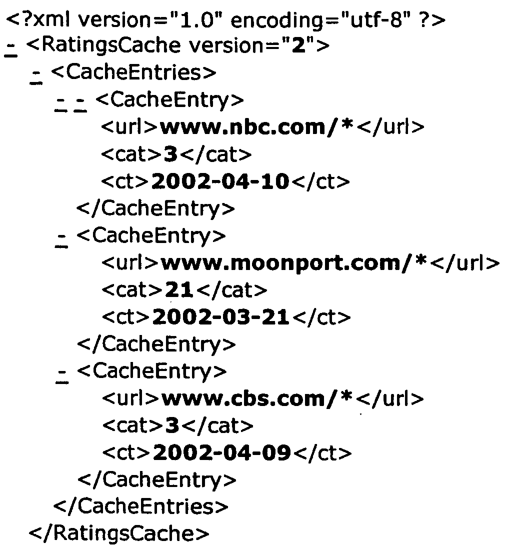

The local ratings cache contains the specified site identifier www.nbc.com/* and states that the site identifier has a content category of "3." The wildcard character "*" employed with this site identifier references all site identifiers beginning with www.nbc.com, meaning that any site identifier beneath this domain name would have a category of "3." The specified URL is beneath the www.nbc.com and thus referenced by this site identifier entry. Since the only category blocked in the age group map in the present example for age group 1 is content category 1, the user may permissibly view the specified site identifier, and the computer permits access thereto.

From the foregoing, the invention can be seen to provide a consumer with a valuable way to filter web sites that may permissibly viewed by a computer user. The various computer systems and components shown in FIGS. 1-4 and described in the specification are merely exemplary of those suitable for use in connection with the present invention. Accordingly, the scope of the present invention is defined by the appended claims rather than the foregoing description.

## Claims

1. A system for determining whether a user of a computer having settings for the user may view an Internet site referenced by a specified site identifier, comprising: a local ratings cache stored on the computer that includes at least one site-identifier and a content category associated therewith; a cache refresher stored on the computer that determines whether the local ratings cache references the specified site identifier and, if not, obtains a content category for the specified site-identifier from a ratings service and stores the content category in said local ratings cache; and a local ratings interpreter stored on the computer that determines based on the settings for the user and the content category for the specified site identifier whether to allow the user to access the Internet site referenced by the specified site identifier.

2. The system of claim 1, further comprising an allow-block list stored on the computer and adapted to contain primary site identifiers and secondary site identifiers and, for each such site identifier, a designation of whether viewing of the site by the user either is allowed or is disallowed, wherein, regardless of the determination by said local ratings interpreter, the computer permits access to the site referenced by the specified site identifier if designated as allowed and denies access to the site referenced by the specified site identifier if designated as disallowed.

3. The system of claim 1, wherein the local ratings cache is in the Extensible Markup Language ("XML") format.

4. The system of claim 1, wherein the specified site identifier is a Uniform Resource Locator ("URL").

5. A system for determining whether a computer user having a designated user age group may view an Internet site referenced by a specified site identifier, comprising: an age group map stored on the computer that designates content categories of Internet sites that at least the user age group is permitted to access; a local ratings cache stored on the computer that contains at least one site identifier and a content category associated therewith; a cache refresher on the computer that determines whether the local ratings cache references the specified site identifier and, if not, obtains a content category for the specified site identifier from a ratings service and stores the content category in said local ratings cache; and a local ratings interpreter on the computer that determines whether the age group map permits the user's age group to access the content category for the specified site identifier and, if so, permits access to the Internet site referenced by the specified site identifier.

6. The system of claim 5, further comprising an allow-block list stored on the computer and adapted to contain primary site identifiers and secondary site identifiers and, for each such site identifier, a designation of whether viewing of the site by the user either is allowed or is disallowed, wherein, regardless of the determination by said local ratings interpreter, the computer permits access to the site referenced by the specified site identifier if designated as allowed and denies access to the site referenced by the specified site identifier if designated as disallowed.

7. The system of claim 5, wherein the local ratings cache is in the Extensible Markup Language ("XML") format.

8. The system of claim 5, wherein the specified site identifier is a Uniform Resource Locator ("URL").

9. A method for determining whether a user of a computer may view an Internet site referenced by a specified site identifier, wherein the computer has a local ratings cache, comprising: obtaining settings for the user; searching the local ratings cache to determine whether the local ratings cache references the specified site identifier and, if not, obtaining a content category for the specified site identifier from a ratings service; and determining based on the settings and the content category for the specified site identifier whether to access the Internet site referenced by the specified site identifier.

10. The method of claim 9, further comprising determining whether the specified site identifier is on an allow-block list and, if so, enabling access to the site referenced by the specified site identifier if designated in the allow-block list as allowed and disabling access to the site referenced by the specified site identifier if designated in the allow-block list as disallowed.

11. The method of claim 9, wherein the settings include an age group for the user.

12. The method of claim 9, wherein the specified site identifier is a Uniform Resource Locator ("URL").

13. The method of claim 9, wherein the settings include an age group map specifying Internet site content categories viewable by at least the age group for the user.

14. The method of claim 9, wherein the local ratings cache is in the Extensible Markup Language ("XML") format.

15. A method for determining whether a user of a computer may view an Internet site referenced by a specified site identifier, wherein the computer has an allow-block list and a local ratings cache, comprising: obtaining an age group for the user; obtaining an age group map that designates Internet site content categories that at least the age group for the user is permitted to access; determining whether the allow-block list references the specified site identifier and, if so, enabling access to the site referenced by the specified site identifier if designated in the allow-block list as allowed and disabling access to the site referenced by the specified site identifier if designated in the allow-block list as disallowed; searching, if the specified site identifier is not on the allow-block list, the local ratings cache to determine whether the local ratings cache references the specified site identifier and, if not, obtaining a content category for the designated site identifier from a ratings service; and determining, if the specified site identifier is not on the allow-block list, whether, based on the age group map, the user's age group is permitted to access the content category for the specified site identifier, and, if so, permitting access to the Internet site referenced by the specified site identifier.

16. The method of claim 15, wherein the local ratings cache is in the Extensible Markup Language ("XML") format.

17. The method of claim 15, wherein the specified site identifier is a Uniform Resource Locator ("URL").

18. A method for determining whether a user of a local computer may view an Internet site referenced by a specified site identifier, wherein the local computer has a local ratings cache and is operable to communicate via a network with a content settings service having an age group and allow-block list for the user and an age group map, comprising: obtaining an age group and an allow-block list for the user from the content settings service; obtaining an age group map from the content settings service; determining whether or not the allow-block list references the specified site identifier and, if so, enabling access to the site referenced by the specified site identifier if designated in the allow-block list as allowed, and disabling access to the site referenced by the specified site identifier if designated in the allow-block list as disallowed; searching, if the allow-block list does not reference the specified site identifier, the local ratings cache to determine whether the local ratings cache references the specified site identifier and, if not, obtaining a content category for the specified site identifier from a ratings service; and determining, if the allow-block list does not reference the specified site identifier, whether, based on the age group map, the user's age group is permitted to access the content category for the specified site identifier, and, if so, permitting access to the Internet site referenced by the specified site identifier.

19. The method of claim 18, wherein the step of searching the local ratings cache further includes obtaining a content category for the specified site identifier from a ratings service if the content category for the specified site identifier referenced in the local ratings cache has not be updated during a previous specified time period.

20. The method of claim 18, wherein the local ratings cache is in the Extensible Markup Language ("XML") format.

21. The method of claim 18, wherein the specified site identifier is a Uniform Resource Locator ("URL").

22. A system for determining whether a user of a local computer having settings for the user may view an Internet site referenced by a site identifier, comprising: a local ratings cache component stored on the computer; a cache refresher component on the computer that determines whether the local ratings cache references the specified site identifier and, if not, obtains a content category for the specified site identifier from a ratings service and stores the content category in said local ratings cache; and a local ratings interpreter component on the computer that determines based on the settings and the content category for the specified site identifier whether to access the Internet site referenced by the specified site identifier.

23. The system of claim 22, further comprising an allow-block list component stored on the local computer and adapted to contain primary site identifiers and secondary site identifiers and, for each such site identifier, a designation of whether viewing of the site by the user either is allowed or is disallowed, wherein, regardless of the determination by said local ratings interpreter, the computer permits access to the site referenced by the specified site identifier if designated as allowed and denies access to the site referenced by the specified site identifier if designated as disallowed.

24. The system of claim 22, wherein the specified site identifier is a Uniform Resource Locator ("URL").

25. A system for determining whether a computer user having a designated user age group may view an Internet site referenced by a site identifier, comprising: an age group map component stored on the computer; a local ratings cache component stored on the computer; a cache refresher component on the computer that determines whether the local ratings cache references the specified site identifier and, if not, obtains a content category for the specified site identifier from a ratings service and stores the content category in said local ratings cache; and a local ratings interpreter component that based on the age group map, whether the user's age group is permitted to access the content category for the specified site identifier, and, if so, permitting access to the Internet site referenced by the specified site identifier.

26. The system of claim 25, further comprising an allow-block list component stored on the computer and adapted to contain primary site identifiers and secondary site identifiers and, for each such site identifier, a designation of whether viewing of the site by the user either is allowed or is disallowed, wherein, regardless of the determination by said local ratings interpreter, the computer permits access to the site referenced by the specified site identifier if designated as allowed and denies access to the site referenced by the specified site identifier if designated as disallowed.

27. The system of claim 25, wherein the specified site identifier is a Uniform Resource Locator ("URL").

28. A system for determining whether a user of a computer may view an Internet site referenced by a specified site identifier, wherein the computer has a local ratings cache, comprising: means for obtaining settings for the user; means for searching the local ratings cache to determine whether the local ratings cache references the specified site identifier and, if not, obtaining a content category for the specified site identifier from a ratings service; and means for determining based on the settings and the content category for the specified site identifier whether to access the Internet site referenced by the specified site identifier.

29. The system of claim 28, wherein the specified site identifier is a Uniform Resource Locator ("URL").

30. A system for determining whether a user of a computer may view an Internet site referenced by a specified site identifier, wherein the computer has an allow-block list and a local ratings cache, comprising: means for obtaining an age group for the user; means for obtaining an age group map that designates Internet site content categories that at least the age group is permitted to access; means for determining whether the allow-block list references the specified site identifier and, if so, enabling access to the site referenced by the specified site identifier if designated in the allow-block list as allowed and disabling access to the site referenced by the specified site identifier if designated in the allow-block list as disallowed; means for searching, if the allow-block list does not reference the specified site identifier, the local ratings cache to determine whether the local ratings cache references the specified site identifier and, if not, obtaining a content category for the designated site identifier from a ratings service; and means for determining based on the age group map, whether the user's age group is permitted to access the content category for the specified site identifier, and, if so, permitting access to the Internet site referenced by the specified site identifier.

31. The system of claim 30, wherein the specified site identifier is a Uniform Resource Locator ("URL").

32. A system for determining whether a user of a local computer may view an Internet site referenced by a specified site identifier, wherein the local computer has a local ratings cache and is operable to communicate via a network with a content settings service containing an age group and allow-block list for the user and an age group map, comprising: means for obtaining an age group and an allow-block list for the user from the content settings service; means for obtaining an age group map from the content settings service; means for determining whether the allow-block list references the specified site identifier and, if so, enabling access to the site referenced by the specified site identifier if designated in the allow-block list as allowed and disabling access to the site referenced by the specified site identifier if designated in the allow-block list as disallowed; means for searching, if the allow-block list does not reference the specified site identifier, the local ratings cache to determine if the specified site identifier is referenced therein and, if not, obtaining a content category for the specified site identifier from a ratings service; and means for determining, if the allow-block list does not reference the specified site identifier, based on the age group, the age group map and the content category for the specified site identifier, whether the user may view the Internet site referenced by the specified site identifier.

33. The system of claim 32, wherein the specified site identifier is a Uniform Resource Locator ("URL").

34. A computer-readable medium having computer-executable instructions for performing a method for determining whether a user of a computer may view an Internet site referenced by a specified site identifier, wherein the computer has a local ratings cache, the method comprising: obtaining settings for the user; searching the local ratings cache to determine whether the local ratings cache references the specified site identifier and, if not, obtaining a content category for the specified site identifier from a ratings service; and determining based on the settings and the content category for the specified site identifier whether to access the Internet site referenced by the specified site identifier.

35. The computer-readable medium of claim 34, wherein the specified site identifier is a Uniform Resource Locator ("URL").

36. A computer-readable medium having computer-executable instructions for performing a method for determining whether a user of a computer may view an Internet site referenced by a specified site identifier, wherein the computer has an allow-block list and a local ratings cache, the method comprising: obtaining an age group for the user; obtaining an age group map that designates Internet site content categories that at least the age group is permitted to access; determining whether the allow-block list references the specified site identifier and, if so, enabling access to the site referenced by the specified site identifier if designated in the allow-block list as allowed and disabling access to the site referenced by the specified site identifier if designated in the allow-block list as disallowed; searching, if the allow-block list does not reference the specified site identifier, the local ratings cache to determine if the specified site identifier is referenced therein and, if not, obtaining a content category for the designated site identifier from a ratings service; and determining, if the allow-block list does not reference the specified site identifier, based on the age group, whether the user's age group is permitted to access the content category for the specified site identifier, and, if so, permitting access to the Internet site referenced by the specified site identifier.

37. The computer-readable medium of claim 36, wherein the specified site identifier is a Uniform Resource Locator ("URL").

38. A computer-readable medium having computer-executable instructions for performing a method for determining whether a user of a local computer may view an Internet site referenced by a specified site identifier, wherein the local computer has a local ratings cache and is operable to communicate via a network with a content settings service containing an age group for the user and an age group map, the method comprising: obtaining an age group and allow-block list for the user from the content settings service; obtaining an age group map from the contents setting service; determining whether the allow-block list references the specified site identifier and, if so, enabling access to the site referenced by the specified site identifier if designated in the allow-block list as allowed and disabling access to the site referenced by the specified site identifier if designated in the allow-block list as disallowed; searching, if the allow-block list does not reference the specified site identifier, the local ratings cache to determine whether the local ratings cache references the specified site identifier and, if not, obtaining a content category for the specified site identifier from a ratings service; and determining, if the allow-block list does not reference the specified site identifier, based on the age group, whether the user's age group is permitted to access the content category for the specified site identifier, and, if so, permitting access to the Internet site referenced by the specified site identifier.

39. The computer system of claim 38, wherein the specified site identifier is a Uniform Resource Locator ("URL").

40. A computer-readable medium having computer-executable instructions for a computer system for determining whether a user of a computer having settings for the user may view an Internet site referenced by a specified site identifier, the system comprising: a local ratings cache storable on the computer that includes at least one site identifier and a content category associated therewith; a cache refresher storable on the computer that determines whether the local ratings cache references the specified site identifier and, if not, obtains a content category for the specified site-identifier from a ratings service and stores the content category in said local ratings cache; and a local ratings interpreter storable on the computer that determines based on the settings for the user and the content category for the specified site identifier whether to allow the user to access the Internet site referenced by the specified site identifier.

41. The computer-readable medium of claim 40, further comprising an allow-block list storable on the computer and adapted to contain primary site identifiers and secondary site identifiers and, for each such site identifier, a designation of whether viewing of the site by the user either is allowed or is disallowed, wherein, regardless of the determination by said local ratings interpreter, the computer permits access to the site referenced by the specified site identifier if designated as allowed and denies access to the site referenced by the specified site identifier if designated as disallowed.

42. The computer system of claim 40, wherein the specified site identifier is a Uniform Resource Locator ("URL").

43. A computer-readable medium having computer-executable instructions for a computer system for determining whether a computer user having a designated user age group may view an Internet site referenced by a specified site identifier, the system comprising: an age group map storable on the computer that designates content categories of Internet sites that at least the user age group is permitted to access; a local ratings cache storable on the computer that contains at least one site identifier and a content category associated therewith; a cache refresher storable on the computer that determines whether the local ratings cache references the specified site identifier and, if not, obtains a content category for the specified site identifier from a ratings service and stores the content category in said local ratings cache; and a local ratings interpreter storable on the computer that determines whether the age group map permits the user's age group to access the content category for the specified site identifier and, if so, permits access to the Internet site referenced by the specified site identifier.

44. The computer-readable medium of claim 43, further comprising an allow-block list storable on the computer and adapted to contain primary site identifiers and secondary site identifiers and, for each such site identifier, a designation of whether viewing of the site by the user either is allowed or is disallowed, wherein, regardless of the determination by said local ratings interpreter, the computer permits access to the site referenced by the specified site identifier if designated as allowed and denies access to the site referenced by the specified site identifier if designated as disallowed.

45. The computer-readable medium of claim 43, wherein the specified site identifier is a Uniform Resource Locator ("URL").

46. A computer-readable medium having computer-executable instructions for a computer, comprising: means for obtaining settings for the user; means for searching a local ratings cache to determine whether the local ratings cache references the specified site identifier and, if not, obtaining a content category for the specified site identifier from a ratings service; and means for determining based on the settings for the user and the content category for the specified site identifier whether to access the Internet site referenced by the specified site identifier.

47. The computer system of claim 46, wherein the specified site identifier is a Uniform Resource Locator ("URL").

48. In a networked computing environment having a content settings service containing a user age group and an allow-block list for a user and an age group map, a method for communicating the settings for the user to a local computer, comprising: establishing a communications session between the content settings service and the local computer; transmitting to the local computer the user age group and allow-block list for a specified user; and transmitting to the local computer the age group map.
